# EUROPEAN PATENT SPECIFICATION

(11) **EP 2 706 229 B1**
(45) Date of publication and mention of the grant of the patent: **28.10.2015**
(21) Application number: 13182724.8
(22) Date of filing: 03.09.2013
(51) Int. Cl.: H02P 9/14, F03D 7/02

(54) **Turbine and control system of the over-power of said turbine**
Turbine und Kontrollsystem der Überleistung der Turbine
Turbine et système de contrôle de la surcharge de cette turbine

(30) Priority: 04.09.2012 IT VR20120178
(43) Date of publication of application: 12.03.2014
(73) Proprietor: Penta Systems S.r.l., 37030 Badia Calavena (VR) (IT)
(72) Inventor: Cattano, Aldo, 37030 Badia Calavena (VR) (IT)
(74) Representative: Fisauli, Beatrice A. M.

(56) References cited:
- EP-A2- 1 237 263
- US-A1- 2008 277 938
- US-A1- 2010 109 324

## Description

The present invention refers, in general, to a turbine and to a control system for controlling the overpower of said turbine.

As is known, the exploitation of wind energy is implemented by means of special turbines which, in general, have a rotor with a vertical axis or with a horizontal axis relative to the ground.

The choice of the turbine to be used in a specific application depends on a series of factors which are to be considered when studying the plant, such as the particular distribution of the wind in the place of installation.

In general, the horizontal axis turbines have proved to be the best choice for the exploitation of wind energy while the configuration with a vertical axis is confined to cases in which there are special conditions such as size limits or other.

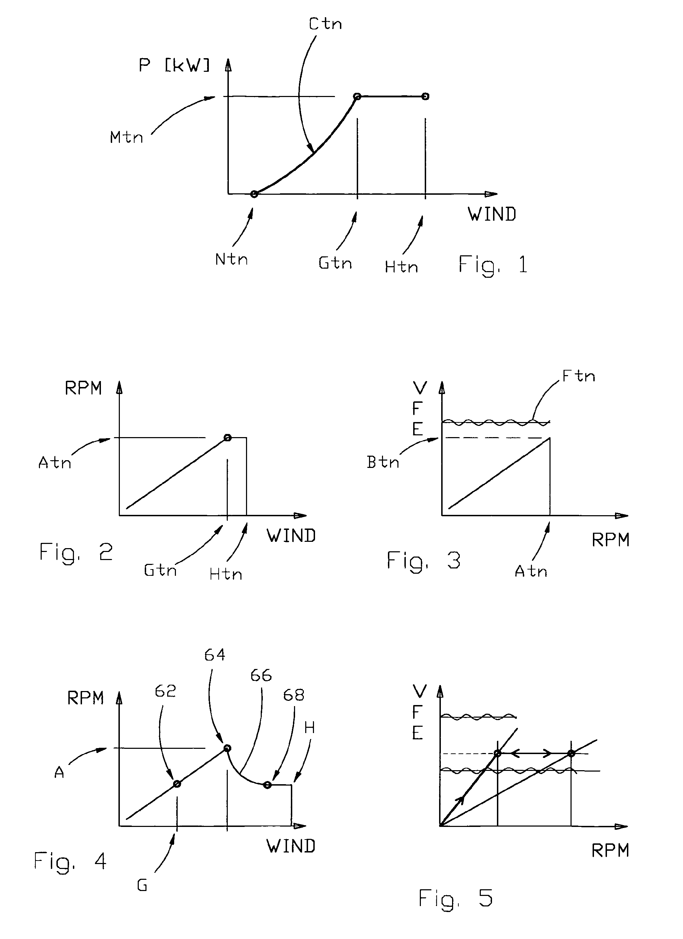

The behavior of the known horizontal axis turbines is described below with reference to figures 1, 2 and 3.

In the horizontal axis turbines, the rotor blades are connected to the shaft of an electric generator coupled electromagnetically with a stator so as to obtain an electric current from the relative rotation of the rotor relative to the stator. The higher the speed of rotation of the rotor (indicated with RPM on the abscissa in figure 3), the greater the voltage obtained (indicated with a continuous line and a V on the ordinate). The known electric generators have a magnetic field between stator and rotor which has a characteristic magnetic flux Fₜₙ.

Below, the subscript "tn" indicates the parameters and the values that refer to the prior art.

Constructive limits of the rotor and electrical limitations of the components impose the maximum speed of rotation Aₜₙ and the maximum voltage Bₜₙ, respectively, with which the wind turbine can operate to convert the wind energy into electrical energy.

According to the constructive typology of the horizontal axis turbine considered in the project, this turbine will present a specific characteristic operation depending on the speed of the wind the turbine is subjected to, as it appears from figure 1. For the evaluation of this characteristic operation, it is possible to represent the output electrical power (indicated in P) as a function of the speed of the wind (indicated in WIND) striking the blades of the turbine in order to obtain the so-called power curve Cₜₙ.

The representation of the power curve Cₜₙ is useful to identify the sector of utilization of each typology of turbine. Indeed, each wind turbine has its own unique power curve through which the turbine is classified primarily on the base of three fundamental parameters: cut-in speed Nₜₙ, rated speed Gₜₙ and cut-out speed Hₜₙ.

In fact, the known horizontal axis turbines according to their construction and control system adopted have a cut-in speed Nₜₙ that corresponds to the wind speed with which the turbine begins to produce electrical energy.

The rated speed Gₜₙ indicates the minimum wind speed with which the turbine begins to produce its own rated power Mₜₙ.

Finally, the cut-out speed Hₜₙ is the wind speed chosen during the design phase as maximum speed beyond which the turbine should not operate in order to avoid damages.

The control systems carried out according to the known art try to improve the performance of wind turbines from cut-in speed Nₜₙ to cut-out speed Hₜₙ.

For instance, in order to reduce the cut-in speed Nₜₙ, it is possible to take advantage of the energy from the network to start the rotation of the turbine blades. In this way, the generator is used as an electric motor for a first transitional.

In the sector of the wind speeds included between the cut-in speed Nₜₙ and the rated speed Gₜₙ, the control system usually allows to rotate the shaft of the rotor of the wind turbine at the optimum speed of rotation relative to the instantaneous speed of the wind. The optimum speeds are predetermined experimentally and the control is performed according to known methods.

In the sector of the wind speeds included between the rated speed Gₜₙ and the cut-out speed Hₜₙ, further constructive elements and relative controls are utilized to try to increase the cut-out speed Hₜₙ in order to take advantage of winds in a wider range of speeds.

A typology of control utilized in the known turbines introduces a mechanism for the orientation of the axis of rotation of the rotor relative to the direction of the wind. This orientation mechanism is known as yaw mechanism. This mechanism imposes a rotation of the turbine around an axis perpendicular to the ground, which allows the rotor to operate with its own axis of rotation no more parallel to the direction of the wind. In this way, the rotor can operate with stronger winds but with a lower aerodynamic efficiency.

Besides, this type of control needs an additional motor to keep the offset between axis of rotation of the rotor and direction of the wind constant and controlled, which complicates consequently the construction of the whole machine owing to the presence of the additional motor, the relative sensors and the control management that has to constantly follow the variations of direction and intensity of the wind.

Another known mode for controlling the power converted by a wind turbine is the variation of the pitch angle of the rotor blades by modifying the aerodynamic behavior of each blade on the base of the wind speed. Once the rated power Mₜₙ supplied has been achieved, such power is kept constant even in case of an increase in the wind speed through the variation of the pitch angle so as to obtain the behavior of figure 1. The variation of the pitch angle reduces in proportion the lift of the blade in an attempt to keep constant the torque developed by the rotor.

US 2008/0277938 A1 shows method for controlling the power converted by wind turbine by means of blades' pitch angle control.

However, also this type of control causes a further complexity to the machine because it is necessary to continuously control the variation of the pitch angle with motorized means that have to be monitored and controlled actively.

In addition, said motorized means to be utilized to control both the pitch angle and the orientation of the rotor axis absorb a part of the electrical power that could be supplied by the network on lowering the efficiency of the whole machine.

EP 1237263A2 shows mechanic control of the magnetic flux that couples stator and rotor of the generator, dividing the rotor in two portions. The distance between the two portion can be adjusted.

With reference to figure 2, a further method to control and limit the rotor speed is to take advantage of the control capacity of an inverter that is an electrical component already provided to convert the electricity supplied by the generator in a form acceptable by the electrical network of destination.

By varying the operative conditions of the inverter through an active control, the electrical load imposed on the generator can be modified on affecting, consequently, the speed of rotation of the rotor blades.

In case of a strong wind having a speed greater than the rated speed Gₜₙ, which would lead the rotor to increase its speed of rotation over the maximum speed of rotation Aₜₙ. The controller of the inverter requests a higher current for the generator, this request being considered by the rotor as a request of greater torque provided. In this way, the rotor is electrically braked and slowed, which prevents the number of revolutions per minute (below RPM) of the machine to overcome the maximum rotation speed Aₜₙ.

The reduction of RPM of the rotor may not be maintained for a long time but only for a short time, for instance in the order of a few minutes, and in any case for wind speeds (indicated with Hₜₙ) slightly higher than the rated speed Gₜₙ. The limited time of use of this typology of control is due to the risk that the generator overheats up to burn or melt owing to its operation at a higher power than the rated power.

Accordingly, each control according to the known technique must bring to higher powers than the power limit, and/or in the presence of wind speeds higher than the cut-out speed Hₜₙ, stop the turbine in order to prevent damages to the whole machine. The braking is conventionally performed by utilizing suitable mechanical or electrical braking means.

Once the turbine has been stopped, the turbine may restart only when there are favorable wind conditions for the operation of the turbine. Besides, it will be necessary to wait the time it takes to restart the turbine and, if necessary, to request energy once again to the electrical network in order to facilitate the restart operation.

Hence, the control systems carried out according to the prior art can not guarantee an optimum continuous operation of the turbine in case of variable winds. In particular, in case of strong winds overcoming the rated speed Gₜₙ of operation of the turbine, the efficiency of the energy conversion of the turbine reduces more and more up to the cut-out speed Hₜₙ so that it is necessary to stop the rotor on dispersing much energy in the ambient, which energy could be otherwise supplied to the electric system.

An aim of the present invention is to carry out a turbine and a control system to control the overpower of said turbine in order to overcome the problems and disadvantages of the turbines and systems of the prior art.

Another aim of the present invention is to carry out a turbine and a control system to control the overpower of said turbine in order to reduce the dispersion of energy in the ambient during its operation.

A further aim of the present invention is to carry out a turbine and a control system which do not need complex control mechanisms which in turn absorb a part of the electric energy supplied by the generator utilized in the turbine. All these aims and further aims are reached according to the invention by a turbine which is suitable to supply electric energy to a network by turning the wind energy obtained from the surrounding wind into electric energy. Said turbine comprises:
- a tower bound to soil;
- a nacelle, rotatably coupled to the end of the tower;
- a generator contained in the nacelle and coupled to a rotor unit;
- a control unit, electrically connected to the generator and the network.

The generator comprises a stator and a rotor, the stator and the rotor being magnetically coupled by a magnetic flux. The stator of the generator is bound to the nacelle.

The rotor of the generator is mechanically coupled to the rotor unit. The rotor unit is fluid-dynamically coupled to the wind.

The turbine compris**e** control means for the control of the magnetic flux based on the speed of rotation of the rotor unit and/or the speed of the wind surrounding the turbine. In this way, it is possible to conveniently vary the magnetic flux between stator and rotor of the generator to obtain a range of superior behaviors and make more flexible the operation of the turbine for a wider range of wind speed.

The turbine according to the **invention, is characterized by the fact that** the rotor unit **is** connected through a transmission elastic, for instance a belt and a revolution multiplier to the generator, the revolution multiplier and the generator being thus insulated by the transmission elastic or belt against the vibrations of the rotor unit.

Advantageously, the control means may control the magnetic flux allowing the coupling between stator and rotor of the generator by imposing a first magnetic flux to the generator allowing the generator to behave according to a first operating curve or a second magnetic flux allowing the generator to behave according to a second operating curve.

Indeed, by varying the magnetic flux it is possible to modify the operating curve of the generator and obtain a different behavior according to the wished operative conditions on improving the reaction of the turbine in wind conditions wider than the known art.

In addition, the control means for the control of the magnetic flux may vary the magnetic flux between stator and rotor of the generator continuously, in an interval ranging from a maximum to a minimum.

Advantageously, the control means for the control of the magnetic flux may comprise a rectifier, an inverter and a controller. The controller may control the generator actively.

Besides, the nacelle may be oriented so as to be invested first by the wind which then invests the rotor unit. In addition, a sensor may be comprised to detect the yaw angle, and the generator may be an asynchronous electric machine with permanent magnets. Through said elements and operative modes it is possible to improve the flexibility of the turbine so that the performance of the turbine is better and stabler.

The number of blades may be five in order to have a larger surface fluid-dynamically coupled to the wind and to have less noise emissions.

The aims and advantages are also reached through a rotor unit which is coupled to a generator which in turn is controlled by a control unit, said control method being adapted to adjust the speed of rotation of the turbine based on the speed of the wind investing the rotor unit, comprising the following phase: when the rotor unit is invested by a wind blowing at speeds above the nominal speed, the running of the generator is controlled by means of the control unit and a variation of the magnetic flux between stator and rotor of the generator is imposed to continuously modify the magnetic flux proportionally to the variation of wind speed and/or proportionally to the variation of the speed of rotation or the rotor unit.

The control method is characterized by the fact that it comprises following phases: In a first field o operation, when the rotor unit is invested by a wind blowing at speeds ranging from the nominal speed and the wind speed that puts the rotor unit in rotation at its maximum speed of rotation, the control unit may reduce the magnetic flux of the stator of the generator in proportion to the increase of the speed of rotation of the rotor unit;
in a second field of operation, when the rotor unit is invested by a wind blowing at speeds ranging from the speed putting the rotor unit in rotation at its maximum speed of rotation to higher speeds than that, the control unit may request a greater amount of electric energy to the generator than the electric energy the generator can supply at that time in order to decelerate the rotor of the generator and consequently, to decelerate the rotor unit up to a predetermined speed of rotation, lower than the maximum speed of rotation of the rotor unit;
during the deceleration of the rotor unit according to the preceding phase, up to a lower speed of rotation than the maximum speed of rotation, the control unit may increase the magnetic flux proportionally up to reach a new operating point.

Said variations of magnetic flux between stator and rotor of the generator allow to obtain an enlargement of the field of utilization of the turbine and it is possible for the turbine to operate in presence of very strong winds by increasing the cut-out speed.

Besides, the rotor unit may comprise at least one blade with fixed pitch angle which is operated, in the second field of operation, according to a rotor unit rotation speed which reduces the lift of the at least one blade.

In this way, the simple construction of a blade with fixed pitch angle allows to obtain a continuous operation of the turbine and in case of strong winds it is not necessary to stop the turbine.

Advantageously, the variation of the magnetic flux between stator and rotor of the generator allows to reduce the magnetic flux from a first maximum magnetic flux to a minimum magnetic flux, proportionally to the variation of the wind speed and/or proportionally to the variation of the speed of rotation of the rotor unit continuously and vice versa.

Further features and details of the invention will be better understood from the following description which is supplied as a non-limiting example as well as from the accompanying drawings wherein:
Figures 1, 2 and 3 are three graphs representing the behavior of a turbine carried out according to the prior art;
Figure 4, 5 are two graphs representing the behavior of a turbine carried out according to the invention;
Figure 6 is a schematic view of a turbine connected to the network and carried out according to the invention;
Figure 7 is a schematic view of some components arranged inside the turbine in Fig. 6;
Figure 8 is a schematic view of other components of the turbine in Fig. 6;
Figure 9 is a graph representing the behavior of a turbine and a method for the control of the overpower of said turbine according to the invention;
Figures 10, 11 are two schematic diagrams representing the aerodynamic behavior of a blade of a turbine according to the invention.

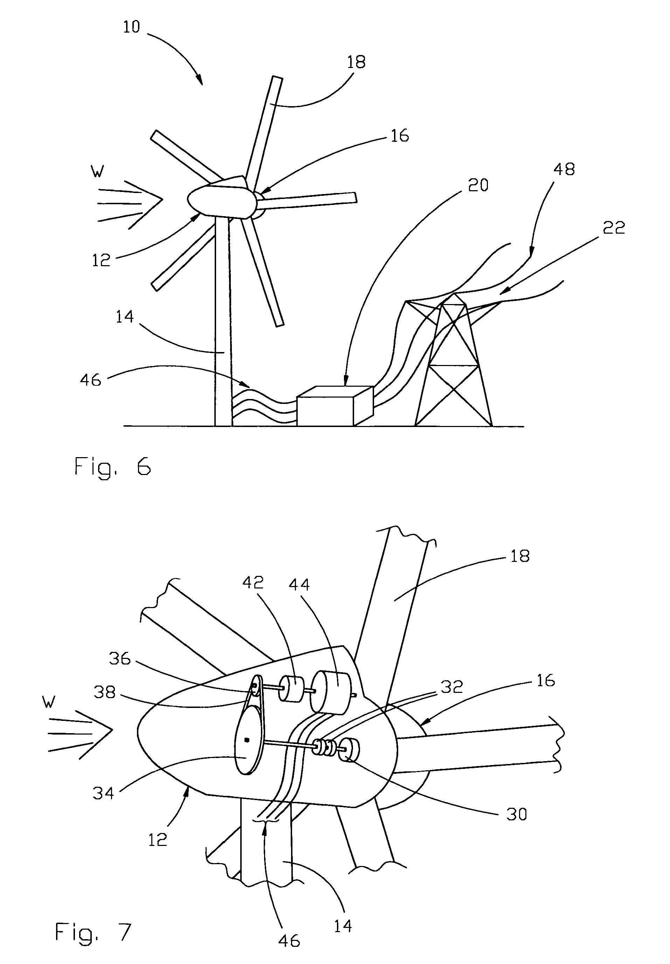

With reference to the accompanying drawings, in particular Figures 6 and 7, reference number 10 denotes a wind turbine comprising a nacelle 12 which is connected rotatably to an end of a tower 14 by means of a fifth wheel, not visible in the drawing, so as to allow the rotation of the nacelle 12 on aligning the nacelle to the wind direction W.

A sensor is coupled to the fifth wheel, not visible in the drawing, to detect the yaw angle of the nacelle 12.

A rotor unit 16 is coupled to the nacelle 12. The rotor unit 16 in turn comprises five blades 18 of which only one is represented in Figure 6.

The turbine 10 is carried out according to a downwind configuration so that at first, the wind W invests the nacelle 12 and then, the five blades 18.

Of course, the number of blades may be different from five and the configuration of the turbine may be upwind.

The turbine 10 is electrically connected to a control unit 20 which in turn is electrically connected to the destination network 22 of the electric energy generated by the turbine 10.

As it appears from Figure 7, the rotor unit 16 inside the nacelle 12 is connected to a hub 30, connected in cascade to two electromechanical brakes 32 and a first pulley 34.

The first pulley 34 is coupled to a second pulley 36 through a belt 38. The second pulley 36 is connected to a generator 44 through a revolution multiplier 42.

Preferably, the revolution multiplier 42 is a planetary gearbox and the generator 44 is an asynchronous electric machine equipped with permanent magnets.

The presence of the belt 38 allows to isolate the revolution multiplier 42 and the generator 44 from the vibrations arising from the interaction of the wind W with the blades 18 of the turbine 10.

Three electric cables 46 connect the generator 44 to the control unit 20 while three additional electric cables 48, visible in Figure 6, allow to connect the control unit 20 to the network 22.

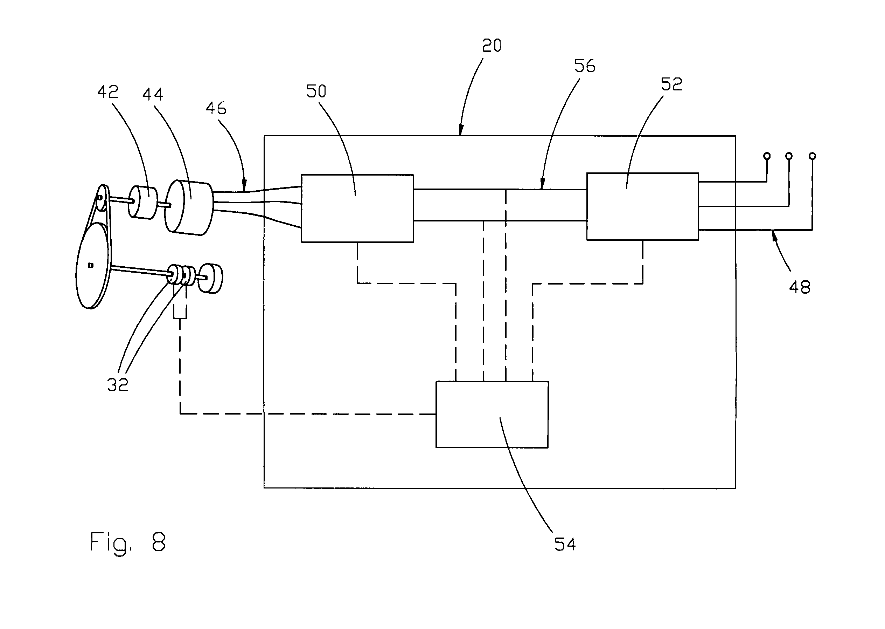

With reference to Figure 8, the control unit 20 comprises a rectifier, an inverter 52 and a controller 54. The controller 54 is operatively connected to the rectifier 50, the inverter 52 and two electromechanical brakes 32 in order to control the operation of these components as described below. Of course, the controller 54 may be operatively connected also to other components of the turbine 10 in order to control the operation of same.

The rectifier 50 is electrically connected to the inverter 52 by means of a direct current bus 56 hereinafter called DC bus 56.

Since the controller 54 controls the rectifier 50 and the inverter 52, the controller 54 may vary actively the current passing in the stator of the generator 44, in order to modify its behavior in the modes according to the invention. The controller 54, for instance by means of a Field Weakening algorithm or weakening algorithm, may modify the magnetic flux between stator and rotor of the generator 44. The control of the controller 54 may be a vector control, for instance according to the system utilized in the controls of electric motors in feedback.

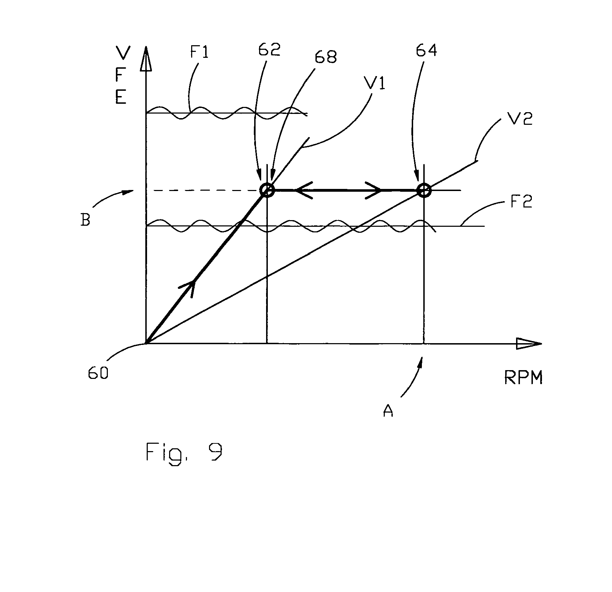

The operation of an overpower control in a turbine according to the invention is described below by using, for ease of exposition, the figures and the references utilized above with particular reference to Figure 9.

Through the above measures relating to the controller 54, the generator 44 may vary the magnetic flux coupling stator and rotor continuously on taking two values of the magnetic flux, indicated with F1 and F2 in Figure 9, or others. For instance, the magnetic flux F1 may be the maximum magnetic flux that can be imposed in the generator 44.

For ease of exposition, only two values of the magnetic flux have been represented. These two values indicate a behavior of the generator 44, respectively. In case the magnetic flux corresponds to value F1, the behavior of the generator 44 follows a first operating curve V1. In case the magnetic flux corresponds to value F2, the behavior of the generator 44 follows a second operating curve V2.

It is evident that the controller 54 may dispose the generator 44 to work according to additional magnetic flux values different from F1 and F2 and consequently, according to additional operating curves different from V1 and V2.

In the absence of wind, the rotor unit 16 is stationary and the turbine 10 is in an idle state as represented in 60. The controller 54 imposes the magnetic flux F1 to the generator 44, as indicated in Figure 9. The sensor detecting the yaw angle of the nacelle 20 is active. The two electromechanical brakes 32 are closed so as not to consume energy.

When the wind begins to grow in intensity, the direction of the wind usually is not parallel to the axis of rotation of the rotor unit 16 and therefore, the nacelle 20 rotates and the sensor detecting the yaw angle communicates the variation to the controller 54 by sending a signal of variation of the yaw angle to the controller 54.

When the controller 54 receives the signal of a variation of the yaw angle beyond a predetermined limit, the controller 54 controls the opening of the two electromechanical brakes 32 and the rotor unit 16 is started by using the generator 44 as if it were a motor in order to achieve the suitable RPM allowing the rotor unit 16 to continue to rotate by taking advantage only of the thrust of the wind W.

At this point, the generator 44 ceases to operate as motor and operates as generator and begins to produce electric energy. In case the RPM decrease to the point of stopping the rotor unit 16, for instance in case of an insufficient wind W, the controller 54 restarts the above described procedure after a predetermined time.

If the rotor unit 16 continues to slow to the point of stopping and the variation of the yaw angle is no more detected, the two electromechanical brakes 32 are closed. This control procedure allows to maintain the energy consumption low.

In case the turbine 10 begins to maintain the rotation state only with the thrust of the wind W, the system follows a first part of power curve C preset in the controller 54, similar to that in Figure 1.

Concerning the speeds of wind W included between the cut-in speed N and the nominal speed G, a certain power to be absorbed for an optimization of the performance of the turbine 10 corresponds to each RPM of the rotor unit 16.

When the turbine 10 reaches the level of the nominal power M, the electrical limits of the components of the turbine 10 are near, for instance near the maximum voltage limit B, as indicated in Figure 9.

If the speed of wind W continues to increase and overcomes the nominal speed G as represented in Figure 4, the controller 54 may command the operation of the generator 44 with a magnetic flux different from F1 and vary the intensity continuously.

As visible in Figure 9, beginning from point 62 it is possible to maintain the maximum voltage B on increasing at the same time the RPM of the rotor unit 16 so as to reach the maximum speed of rotation A in the point 64 of the operating curve V12 corresponding to the magnetic flux F2 having an intensity lower than F1.

In case the speed of the wind W continues to increase and consequently, the rotor unit 16 tends to increase the RPM, the controller 54 commands the rectifier 50 and the inverter 52 to request an amount of current greater than the amount of current that the generator 44 can supply to the point 64.

The slowdown occurs by using the generator 44 as an electromagnetic brake, which involves a significant increase in torque. For instance, a generator 44, utilized in some tests, can reach a braking torque of 4000 Nm, sustained for a few minutes.

A part of the energy produced is supplied to the network and the remaining energy is dissipated by a special braking resistor.

In this way, it is possible to reduce the RPM of the rotor unit 16 and, consequently, of the generator 44, by following the curve 66, visible in Figure 4, which indicates the reduction of RPM as the speed of the wind W increases on maintaining the power produced by the turbine constant so as to reach the operating point 68, as it appears from Figures 4 and 9.

Even in the presence of high speeds of the wind W, the turbine 10 has to operate with RPM which are lower and close to those that are reached by the turbine when the rated speed G is reached.

The controller 54 has the generator 44 to work with a higher magnetic flux so as to return to F1 and work on the curve V1.

Said peculiarity allows the turbine 10 according to the invention to process also winds blowing at speeds much higher than those of the cut-out speed Hₜₙ characteristic of known turbines having a rated power comparable to the turbine 10 according to the invention on maintaining the output rated power constantly. In addition, a continuous operation is obtained also in the presence of strong winds.

Accordingly, the rated power is kept constant by increasing the torque and decreasing the RPM. As described below, the decrease in RPM allows to obtain less lift on the blades and, consequently, the mechanical components of the turbine 10 have not to endure excessive forces.

This behavior is not possible in the known turbines which behave as described previously on the hand of Figures 2 and 3.

In case the wind speed increases further and exceeds the speed indicated in the operating point 68 in Figure 4, the RPM are kept constant by braking the generator 44 electrically with a request for additional electric power analogous to what described previously, until the cut-out speed H of the turbine 10 according to the invention is reached progressively, which is much higher than the known turbines.

The lower lift supported by the blades allows said braking from the operating point 68 to the cut-out speed H so as to further widen the field of possible exploitation of the turbine 10 according to the invention.

Once the cut-out speed H has been reached, the controller 54 actuates consequently the two electromechanical brakes 32 in sequence so as to stop the rotor unit 16 and avoid unwanted damages.

The aerodynamic behavior of the blades 18 of the rotor unit 16 is described below to better explain the advantages of an overpower control performed according to the invention.

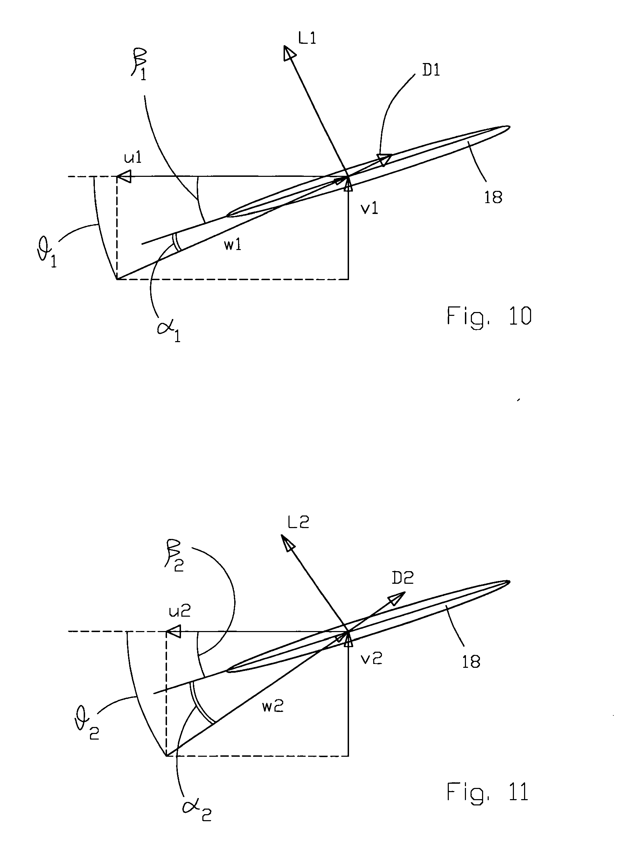

With reference to Figures 10 and 11, the conditions are described in which the section of a blade 18 is at a certain distance from the axis of rotation, this distance being maintained equal in both Figures 9 and 10.

The description of angles, forces and speeds is based on the theory B.E.M (Blade Element Method) and reports the indications utilized according to said theory. In particular, reference is made to the angle of attack with "α", the pitch angle with "β", the sum of α and β with "θ", the tangential speed of the wind to the blade with "u", the axial speed of the wind to the blade with "v", the relative speed seen from the contour of the blade 18 with "w", the lift force with "L" and the resistance force with "D". The tangential speed of the wind to the blade "u" is proportional to the RPM of the rotor unit 16.

The tangential force generating the moment on the hub 30 varies on the base of the lift force L, the resistance force D and the angle θ. As the tangential force increases, the power that the rotor unit 16 can derive from the wind W and convert into electric energy increases consequently.

As it appears from Figure 10, under conditions of a nominal wind, for instance at an undisturbed wind speed of 8 m/s, a first angle of attack α1 of a first relative speed w1 is obtained, which involves a first lift force L1 and a first resistance force D1.

The rotor unit 16 rotates at a first speed of rotation, for instance of 82 RPM involving a rated power M.

On the contrary, Figure 11 represents a situation in which the wind has increased so as to reach, for instance, an undisturbed wind speed of 11 m/s while the RPM of the turbine have been reduced as described previously.

It is possible to obtain a second angle of attack α2, a second relative speed w2 resulting from a second axial velocity of the wind v2, higher than v1, and a second tangential velocity of the wind on the blade u2, lower than u1.

In this way, it is possible to keep the power constant on reducing the speed of rotation of the turbine, for instance to 45 RPM.

On following the wind increase progressively, the triangles of speed of the air flux incident on the blade are influenced.

In particular, if the RPM are reduced, the angle of attack α increases and the efficiency of the wing contour diminishes. The increase in power available in the wind is thus compensated by a less efficiency of the turbine.

The speed control is actuated by the control unit 20 and therefore, only by the electronic management of the turbine. In this way it is possible to avoid the several mechanical actuations of the prior art, as described previously.

The slowdown of the rotor unit 16 on reducing the RPM and therefore, the tangential velocity of the wind on the blade u involves a reduction of the incident relative velocity w. Owing to the quadratic dependence of L and D on said parameter it is evident the influence of the forces developed on the blade. In addition, there is an increase in the angle of attack α and in general, a light loss in the efficiency (L/D). This behavior has been observed experimentally on processing the coefficients of lift and resistance.

Besides, the rotation of the lift and resistance forces involves an increase in the torque developed by the contour of the blade 18.

The loss in RPM is compensated by an increase in the torque which the rotor unit 16 is subjected to. Although the conversion into power worsens, the possibility that it is not necessary to immediately stop the turbine 10 in the presence of winds blowing at speeds slightly higher than the rated speed is an important advantage.

As the windiness increases, the power available in the wind W increases but the capacity of the turbine in converting said power on reducing the lift of the blade 18 diminishes.

In other terms, the power coefficient decreases because the efficiency decreases while the available power increases because the wind increases. The balance is thus kept constant over the nominal speed G of the wind.

The turbine and the control system for controlling the overpower of said turbine according to the invention allow to obtain a turbine more flexible to the variations of the wind speed, in an automatic and simple way without adding the components of the prior art.

The braking is actuated only for a short time, for instance a few seconds, namely, the time necessary to reduce the speed of rotation and change the operating curve while according to the prior art the braking is kept for a long time.

A technician of the sector may effect other changes or variants to be considered as included in the scope of protection of the present invention.

## Claims

1. Turbine (10), adapted to provide electric energy to a network (22) by converting wind energy of the surrounding wind (W), comprising:
- a tower (14), bound to soil;
- a nacelle (12), rotatably coupled to the end of the tower (14);
- a generator (44), contained in the nacelle (12) and coupled to a rotor unit (16);
- a control unit (20), electrically connected to the generator (44) and the network (22);
said generator (44) comprising a stator and a rotor, the stator and the rotor being magnetically coupled by a magnetic flux (F);
said stator of the generator (44) being bound to the nacelle (12);
said rotor of the generator (44) being mechanically coupled to the rotor unit (16);
said rotor unit (16) being fluid-dynamically coupled with the wind (W),
said turbine (10) comprising control means (50, 52, 54) for the control of the magnetic flux (F) based on the speed of rotation of the rotor unit (16) and/or the speed of the wind surrounding the turbine (10),
said turbine (10) **characterized in that** the rotor unit (16) is connected through a belt (38) and a revolution multiplier (42) to the generator (44), the revolution multiplier (42) and the generator (44) being insulated by the belt against the vibrations of the rotor unit (16).

2. Turbine (10) according to the preceding claim, wherein the control means (50, 52, 54) controls the magnetic flux allowing the coupling between stator and rotor of the generator (44) by imposing a first magnetic flux (F1) to the generator (44) allowing the generator (44) to behave according to a first operating curve (V1) or a second magnetic flux (F2) allowing the generator (44) to behave according to a second operating curve (V2).

3. Turbine (10) according to any of the preceding claims, wherein said control means for the control of the magnetic flux vary the magnetic flux (F) between stator and rotor of the generator (44) continuously, in an interval ranging from a maximum (F1) to a minimum (F2).

4. Turbine (10) according to any of the preceding claims, wherein said control means for the control of the magnetic flux (F) comprises a rectifier (50), an inverter (52) and a controller (54), said controller (54) controlling the generator (44) actively.

5. Turbine (10) according to any of the preceding claims, wherein the nacelle (12) is oriented so as to be invested first by the wind (W) which then invests the rotor unit (16), a sensor being comprised to sense the yaw angle, and wherein the generator (44) is an asynchronous electric machine with permanent magnets.

6. Control method for a turbine (10) with nominal speed (G) and comprising a rotor unit (16) which is coupled to a generator (44) which in turn is controlled by a control unit (20), said control method being adapted to adjust the speed of rotation of the turbine (10) based on the speed of the wind investing the rotor unit (16), comprising the following phase:
- when the rotor unit (16) is invested by a wind (W) blowing at speeds above the nominal speed (G), the running of the generator (44) is controlled by means of the control unit (20) and a variation of the magnetic flux (F) between stator and rotor of the generator (44) is imposed to continuously modify the magnetic flux (F) proportionally to the variation of wind speed and/or proportionally to the variation of the speed of rotation of the rotor unit (16);
**characterized in that** of the following phases are comprised:
- in a first field of operation, when the rotor unit (16) is invested by a wind (W) blowing at speeds ranging from the nominal speed (G) and the wind speed which puts the rotor unit (16) in rotation at its maximum speed of rotation (A), the control unit (20) reduces the magnetic flux (F) of the stator of the generator (44) in proportion to increase of the speed of rotation of the rotor unit (16);
- in a second field of operation, when the rotor unit (16) is invested by a wind (W) blowing at speeds ranging from the wind speed putting the rotor unit (16) in rotation at its maximum speed of rotation (A) to higher speeds than this, the control unit (20) requests a greater amount of electric energy to the generator (44) than the electric energy that the generator (44) can supply at that time in order to decelerate the rotor of the generator (44) and consequently, to decelerate the rotor unit (16) up to a predetermined speed of rotation, lower than the maximum speed of rotation (A) of the rotor unit (16);
- during the deceleration of the rotor unit (16) according to the preceding phase, up to a lower speed of rotation than the maximum speed of rotation (A), the control unit (20) increases the magnetic flux (F) proportionally up to reach a new operating point (68).

7. Control method for the control of a turbine (10) according to the preceding claim, wherein the rotor unit (16) comprises at least a blade (18) with fixed pitch angle (β), which is operated in the second field of operation according to a rotor unit (16) speed of rotation which reduces the lift of the at least a blade (18).

8. Control method for the control of a turbine (10) according to any of claims 6 to 7, wherein the variation of the magnetic flux (F) between stator and rotor of the generator (44) allows to reduce the magnetic flux (F) from a first maximum magnetic flux (F1) to a minimum magnetic flux (F2), proportionally to the variation of the wind speed and/or proportionally to the variation of the speed of rotation of the rotor unit (16) continuously and vice versa.

## Patentansprüche

1. Turbine (10) für die Stromspeisung eines Netzwerks (22) durch Umwandlung der Windenergie aus der Umgebung (W), einschließlich:
- ein im Boden verankerter Turm (14),
- ein drehbares an das Ende des Turmes (14) gekoppeltes Maschinenhaus (12),
- ein Generator (44) im Maschinenhaus (12), der an eine Rotoreinheit(16) gekoppelt ist,
- eine elektrisch mit dem Generator (44) und dem Netzwerk (22) verbundenes Steuergerät (20);
der Generator (44) enthält einen Stator und einen Rotor, die beide miteinander magnetisch über einen Magnetstrom (F) gekoppelt sind;
der Stator des Generators (44) ist mit dem Maschinenhaus (12) verbunden; der Rotor des Generators (44) ist mechanisch an die Rotoreinheit (16) gekoppelt;
die Rotoreinheit (16) ist hydrodynamisch mit dem Wind (W) gekoppelt;
die Turbine (10) enthält Steuermittel (50, 52, 54) für die Steuerung des Magnetstroms (F), die in Abhängigkeit von der Drehgeschwindigkeit der Rotoreinheit (16) und/oder der Windgeschwindigkeit um die Turbine (10) ist; die Turbine (10) ist **dadurch gekennzeichnet, dass** die Rotoreinheit (16) über einen Riemen (38) und einen Drehzahlvervielfacher (42) an den Generator (44) geschlossen ist, wobei der Drehzahlvervielfacher (42) und der Generator (44) durch den Riemen vor den Vibrationen der Rotoreinheit (16) geschützt sind.

2. Turbine (10) nach dem vorhergehenden Anspruch, wobei die Steuermittel (50, 52, 54) den Magnetstrom steuern und die Kopplung zwischen dem Stator und dem Rotor des Generators (44) erlauben, indem ein erster Magnetstrom (F1) zum Generator aufgebaut wird, der dem Generator (44) erlaubt, gemäß einer ersten Betriebskurve (V1) zu arbeiten, oder ein zweiter Magnetstrom (F2), der dem Generator (44) erlaubt gemäß einer zweiten Betriebskurve (V2) zu arbeiten.

3. Turbine (10) nach einem der vorhergehenden Ansprüche, wobei die Steuermittel für die Magnetstromsteuerung den Magnetstrom (F) zwischen dem Stator und dem Rotor des Generators (44) ständig innerhalb eines Intervallbereiches zwischen einem Maximum (F1) und einem Minimum (F2) verändern.

4. Turbine (10) nach einem der vorhergehenden Ansprüche, wobei die Steuermittel für die Steuerung des Magnetstroms (F) einen Stromrichter (50), einen Umrichter (52) und einen Regler (54) einschließen, wobei der Regler (54) den Generator (44) aktiv steuert.

5. Turbine (10) nach einem der vorhergehenden Ansprüche, wobei das Maschinenhaus (12) so ausgerichtet werden kann, dass es zuerst vom Wind (W) getroffen wird, der dann auf die Rotoreinheit (16) trifft; ein Sensor ist enthalten, der den Scherwinkel abtastet, und wobei der Generator (44) ein asynchronisches elektrisches Gerät mit Dauermagneten ist.

6. Kontrollmethode für eine Turbine (10) mit Nenngeschwindigkeit (G), die eine Rotoreinheit umfasst(16), die an einen Generator (44) gekoppelt ist, der seinerseits durch ein Steuergerät gesteuert wird (20), das die Geschwindigkeit der Umdrehung der Turbine (10) in Abhängigkeit von der Geschwindigkeit des auf die Rotoreinheit (16) treffenden Windes einstellt; die Methode schließt die folgende Phase ein:
- wenn die Rotoreinheit (16) vom Wind (W) gedreht wird, der Geschwindigkeiten einnimmt, die über der Nenngeschwindigkeit (G) liegen, wird das Laufen des Generators (44) über das Steuergerät (20) gesteuert und ein Wechsel des Magnetstroms( F) zwischen dem Stator und dem Rotor des Generators (44) wird erzwungen, damit der Magnetstrom (F) entsprechend der Schwankungen der Windgeschwindigkeit und/oder entsprechend der Schwankungen der Drehung der Rotoreinheit (16) kontinuierlich geändert wird;
**gekennzeichnet durch** die folgenden Phasen:
- in einem ersten Betätigungsfeld, wenn die Rotoreinheit (16) von einem Wind (W) mit einer Geschwindigkeit zwischen der Nenngeschwindigkeit (G) und der Windgeschwindigkeit, welche die Rotoreinheit (16) zum Drehen bei einer Höhstdrehgeschwindigkeit (A) bringt, getroffen wird, reduziert das Steuergerät (20) den Magnetstrom (F) des Stators des Generators (44) entsprechend der Erhöhung der Drehgeschwindigkeit der Rotoreinheit (16);
- in einem zweiten Betätigungsfeld, wenn die Rotoreinheit (16) von einem Wind (W) mit Geschwindigkeiten innerhalb einer Windgeschwindigkeit, welche die Rotoreinheit (16) zum Drehen bei maximaler Geschwindigkeit (A) bringt, und höheren Geschwindigkeiten getroffen wird, fordert das Steuergerät (20) mehr Strom für den Generator (44) als der Strom, den der Generator (44) zu diesem Zeitpunkt liefern kann, an, um den Rotor des Generators (44) zu verlangsamen und infolgedessen wird die Rotoreinheit (16) auf eine vorher festgelegte Drehgeschwindigkeit, die unter der Höhstdrehgeschwindigkeit (A) der Rotoreinheit (16) liegt, gedrosselt.
- während des Abbremsens der Rotoreinheit (16) gemäß der vorhergehenden Phase auf eine Geschwindigkeit unterhalb der Höchstdrehgeschwindigkeit (A) erhöht das Steuergerät (20) entsprechend den Magnetstrom (F) bis ein neuer Arbeitspunkt (68) erreicht worden ist.

7. Kontrollmethode der Steuerung der Turbine (10) nach dem vorhergehenden Anspruch, wobei die Rotoreinheit (16) mindestens ein Blatt (18) mit einem festen Anstellwinkel (β) umfasst, das im zweiten Betätigungsfeld gemäß einer Drehgeschwindigkeit der Rotoreinheit (16), welche das Anheben des Blattes (18) reduziert, betätigt wird.

8. Kontrollmethode der Steuerung einer Turbine (10) nach einem der Ansprüche von 6 bis 7, wobei die Änderung des Magnetstroms (F) zwischen Stator und Rotor des Generators (44) erlaubt, den Magnetstrom (F) von einem ersten maximalen Magnetstrom (F1) auf einen minimalen Magnetstrom (F2) entsprechend der Änderung der Windgeschwindigkeit und/oder entsprechend der Änderung der Drehgeschwindigkeit der Rotoreinheit (16) kontinuierlich zu reduzieren und umgekehrt.

## Revendications

1. Turbine (10), adaptée pour fournir de l'énergie électrique à un réseau (22) en convertissant l'énergie éolienne du vent environnant (W), comprenant :
- une tour (14), fixée au sol ;
- une nacelle (12), couplée de manière rotative à l'extrémité de la tour (14) ;
- un générateur (44), contenu dans la nacelle (12) et couplé à une unité de rotor (16) ;
- une unité de commande (20), reliée électriquement au générateur (44) et au réseau (22);
ledit générateur (44) comprenant un stator et un rotor, le stator et le rotor étant couplés magnétiquement par un flux magnétique (F) ;
ledit stator du générateur (44) étant fixé à la nacelle (12) ;
ledit rotor du générateur (44) étant couplé mécaniquement à l'unité du rotor (16) ;
ladite unité de rotor (16) ayant un couplage fluide-dynamique avec le vent (W),
ladite turbine (10) comprenant des moyens de commande (50, 52, 54) pour la commande du flux magnétique (F) basé sur la vitesse de rotation de l'unité de rotor (16) et/ou la vitesse du vent entourant la turbine (10),
ladite turbine (10), **caractérisée par le fait que** l'unité de rotor (16) est reliée à travers une courroie (38) et un multiplicateur de révolution (42) sur le générateur (44), le multiplicateur de révolution (42) et le générateur (44) étant isolés par la bande contre les vibrations de l'unité de rotor (16).

2. Turbine (10) selon la revendication précédente, dans lequel le moyen de commande (50, 52, 54) commande le flux magnétique permettant le couplage entre le stator et le rotor du générateur (44) en imposant un premier flux magnétique (F1) pour le générateur (44) permettant le générateur (44) de se comporter selon une première courbe de fonctionnement (V1) ou un deuxième flux magnétique (F2) permettant au générateur (44) de se comporter selon un deuxième courbe de fonctionnement (V2).

3. Turbine (10) selon l'une des revendications précédentes, dans laquelle lesdits moyens de commande pour la commande du flux magnétique fait varier le flux magnétique (F) entre le stator et le rotor du générateur (44) de façon continue, dans un intervalle allant d'un maximum (F1) à un minimum (F2).

4. Turbine (10) selon l'une des revendications précédentes, dans laquelle ledit moyen de commande pour la commande du flux magnétique (F) comprend un redresseur (50), un inverseur (52) et un contrôleur (54), ledit contrôleur (54) commandant le générateur (44) de manière active.

5. Turbine (10) selon l'une des revendications précédentes, dans laquelle la nacelle (12) est orientée de façon à être d'abord investi par le vent (W) qui investit alors l'unité de rotor (16), un capteur étant constitué pour détecter le mouvement de l'angle de lacet, et dans lequel le générateur (44) est une machine électrique asynchrone avec aimants permanents.

6. Méthode de contrôle pour une turbine (10) à une vitesse nominale (G) et comprenant une unité de rotor (16) qui est couplé à un générateur (44) qui à son tour est commandé par une unité de commande (20), ledit procédé de commande étant adapté pour régler la vitesse de rotation de la turbine (10) basé sur la vitesse du vent investissant l'unité de rotor (16), comprenant la phase suivante :
- lorsque l'unité de rotor (16) est investie par le vent (W) soufflant à une vitesse supérieure à la vitesse nominale (G), le fonctionnement du générateur (44) est commandé au moyen de l'unité de commande (20) et une variation du flux magnétique (F) entre le stator et le rotor du générateur (44) est imposée pour modifier en continu le flux magnétique (F) proportionnellement à la variation de la vitesse du vent et/ou proportionnellement à la variation de la vitesse de rotation de l'unité de rotor (16) ;
**caractérisé par le fait que** les étapes suivantes sont comprises :
- dans un premier champ de fonctionnement, lorsque l'unité de rotor (16) est investie par un vent (W) soufflant à des vitesses allant de la vitesse nominale (G) et la vitesse du vent qui met l'unité de rotor (16) en rotation à sa maximum vitesse de rotation (A), l'unité de contrôle (20) réduit le flux magnétique (F) du stator du générateur (44) proportionnellement à l'augmentation de la vitesse de rotation de l'unité de rotor (16) ;
- dans un deuxième champ de fonctionnement, lorsque l'unité de rotor (16) est investie par un vent (W) soufflant à des vitesses allant de la vitesse du vent en mettant l'unité de rotor (16) en rotation à sa vitesse maximale de rotation (A) aux vitesses plus élevées que cela, l'unité de contrôle (20) demande une plus grande quantité d'énergie électrique au générateur (44) que l'énergie électrique que le générateur (44) peut fournir à ce moment afin de ralentir le rotor du générateur (44) et, par conséquent, pour décélérer l'unité de rotor (16) jusqu'à une vitesse de rotation prédéterminée, inférieure à la vitesse maximum de rotation (A) de l'unité de rotor (16) ;
- pendant la décélération de l'unité de rotor (16) en fonction de la phase précédente, jusqu'à une vitesse de rotation inférieure à la vitesse maximale de rotation (A), l'unité de commande (20) augmente proportionnellement le flux magnétique (F) jusqu'à atteindre un nouveau point de fonctionnement (68).

7. Méthode de contrôle pour la commande d'une turbine (10) selon la revendication précédente, dans laquelle l'unité de rotor (16) comprend au moins une lame (18) avec un angle de pas fixe (β), qui est exploité dans le deuxième domaine de fonctionnement en fonction d'une vitesse de l'unité (16) de rotor de rotation qui permet de réduire la portance d'au moins une lame (18).

8. Méthode de commande pour la commande d'une turbine (10) selon l'une des revendications 6 à 7, dans laquelle la variation du flux magnétique (F) entre le stator et le rotor du générateur (44) permet de réduire le flux magnétique (F) à partir d'un premier flux magnétique maximum (F1) jusqu'à un flux magnétique minimum (F2), proportionnellement à la variation de la vitesse du vent et/ou proportionnellement à la variation de la vitesse de rotation de l'unité de rotor (16) en continu et inversement.
